# FASCICULE DE BREVET EUROPEEN

(11) **EP 2 705 937 B1**
(45) Date de publication et mention de la délivrance du brevet: **01.04.2015**
(21) Numéro de dépôt: 13360026.2
(22) Date de dépôt: 04.09.2013
(51) Int. Cl.: B27B 5/22, B23D 47/04

(54) **Machine pour le sciage des bûches de bois**
Maschine zum Schneiden von Baumstämmen
Wooden logs sawing machine

(30) Priorité: 06.09.2012 FR 1258362
(43) Date de publication de la demande: 12.03.2014
(73) Titulaire: AMR Société par actions simplifiées (SAS), 67390 Elsenheim (FR)
(72) Inventeur: Heissler, Robert, 68320 Jebsheim (FR); Bechtel, Michel, 67600 Bindernheim (FR); Vervaux, Maxime, 67140 Zellwiller (FR); Labbe, Eric, 68610 Lauttenbach (FR)
(74) Mandataire: Koelbel, Caroline

(56) Documents cités:
- DE-C- 823 037
- DE-U1- 29 607 119
- DE-U1-202010 010 540
- FR-A- 883 888
- US-A- 446 510

## Description

### Domaine technique:

La présente invention concerne une machine à scier des bûches de bois selon le préambule de la revendication 1.

### Technique antérieure

On connaît des machines pour découper des bûches de bois de feu débitées à une longueur déterminée, souvent d'un mètre, en tronçons de 50cm, de 33cm ou de 25cm de longueur. Certaines de ces machines comportent des berceaux dont l'axe est transversal par rapport à la position de l'opérateur, la lame de la scie circulaire ou la tronçonneuse à chaîne pivotante qui équipe certaines de ces machines étant perpendiculaire à l'opérateur, disposée pratiquement face à lui. Même si la lame de la scie circulaire est protégée par un capot, il se trouve que lors du chargement de la machine avec des bûches à scier, les mains de l'opérateur évoluent à proximité de cette lame, ce qui représente un danger non négligeable et lui fait assumer des risques conséquents. En outre, ces machines à tronçonner sont habituellement prévues pour couper une bûche en deux segments d'égale longueur et un réglage différent pour couper la bûche en trois segments, engendre des complications et de nouveaux risques pour l'opérateur.

On connaît de la publication DE 296 07 119 U1 une machine pour scier des bûches de bois de façon automatique ayant les caractéristiques du préambule de la revendication 1 et qui comporte un tambour en deux parties, une partie haute et une partie basse. Le tambour comporte dans sa longueur quatre canaux ou alvéoles ayant un profil en V agencés pour recevoir les bûches. Entre la partie haute et la partie basse est ménagée une lame de scie qui fait un angle droit avec l'axe du tambour. Cependant, les bûches placées dans les alvéoles ne sont pas maintenues en position dans celles-ci, ce qui rend la coupe dangereuse et peu fiable. En outre, le tambour est incliné par rapport au sol pour permettre aux bûches d'être guidées par gravité pour être évacuées par un convoyeur. Même si une butée située en aval du tambour permet de régler la longueur de coupe de la bûche, ce réglage n'est pas sécurisé sur toute la longueur de la bûche. En effet, la machine présente le désavantage de ne pas guider les bûches sur la totalité de leur longueur lors de la coupe. Par conséquent, le guidage de la bûche pendant l'opération de coupe n'est pas satisfaisant et source d'accident.

La publication US 446, 510 A décrit par ailleurs une machine pour scier du bois comportant un support-transporteur constitué d'une table en rotation autour d'un arbre sous laquelle est située une scie. Le support-transporteur comporte des réservations de maintien ayant une section en V permettant de recevoir les bûches. Chaque réservation de maintien coopère avec une pince en forme de levier incurvé permettant de maintenir la bûche contre la réservation de maintien. La table et la scie sont placées, soit à la verticale, soit avec une légère inclinaison par rapport à la verticale. Lorsque la bûche est coupée par la scie et que la pince est retirée, elle tombe par gravité au sol. Le désavantage d'une telle machine réside dans le fait que chaque réservation doit comporter une pince de maintien, ce qui n'est pas économique. De plus, de telles pinces ne permettent pas d'empêcher la translation de la bûche.

### Exposé de l'invention :

La présente invention vise à pallier les inconvénients relevés en proposant une machine à scier des bûches de bois de feu, semi-automatique ou automatique, qui permet de travailler de façon sécurisée et silencieuse, avec un rendement élevé, tout en disposant d'une grande flexibilité en raison de la présence de moyens de réglage de la longueur de coupe des tronçons de bûche coupés à chaque cycle de fonctionnement de la machine. Avantageusement, la machine selon l'invention permet de sécuriser et d'optimiser le guidage lors de la coupe de la bûche, sur toute sa longueur, et ce quelque soit sa longueur de coupe, ainsi que de garantir un blocage en translation et en rotation de la bûche lors de la coupe.

Dans ce but, l'invention concerne une machine telle que définie en préambule, caractérisée en ce que ledit ensemble éjecteur est de construction télescopique.

Cette construction télescopique a l'avantage de permettre de modifier la longueur des logements en fonction de la longueur de coupe pour assurer un bon guidage des tronçons de bûches pendant et après la coupe.

De manière avantageuse, l'axe central dudit support rotatif est incliné par rapport à l'horizontale de sorte que l'ensemble de chargement guide la bûche de bois par gravité vers ledit ensemble de sciage.

Selon la construction dudit barillet mobile, ledit ensemble récepteur de bûches constitue la partie frontale du barillet et se compose d'un corps cylindrique qui comporte au moins un, et de préférence quatre alvéoles qui servent de logements aux bûches en vue de les guider jusqu'à l'ensemble de sciage.

De façon avantageuse, les alvéoles sont définis par des secteurs tubulaires ayant une section sensiblement triangulaire et débouchant à l'avant du barillet sur des ouvertures pour constituer des embouchures réceptrices des bûches lors du chargement de la machine.

Cet ensemble récepteur de bûches peut comporter un guide latéral agencé pour soulever le tronçon de bûche restant après un premier cycle de coupe et pour le positionner en prévision du cycle de coupe suivant. Ainsi, cet ensemble récepteur de bûches positionne et maintient le tronçon de bûche dès la première coupe et lors des cycles de coupe suivants.

Ledit ensemble de guidage de coupe est de préférence constitué de deux éléments de forme générale circulaire parallèles et disposés à la sortie de l'ensemble récepteur de bûches.

Avantageusement, ledit ensemble éjecteur comporte un conteneur cylindrique dans lequel est ménagé au moins un, et de préférence quatre alvéoles qui servent de logements aux tronçons de la bûche coupés.

Dans cette réalisation, chaque alvéole correspond en forme et en dimensions à un alvéole correspondant de l'ensemble récepteur de bûches et est situé dans le prolongement de cet alvéole.

Une construction avantageuse consiste à réaliser lesdits alvéoles en au moins deux segments, un segment amont et un segment aval montés télescopiquement l'un par rapport à l'autre.

Pour des raisons sécuritaires et pour améliorer l'efficacité de la machine, ledit ensemble de sciage comporte une lame de scie circulaire dont l'axe de rotation est parallèle à l'axe central du barillet mobile et un bras de verrouillage agencé pour bloquer ladite bûche à scier dans l'alvéole du corps cylindrique dudit ensemble récepteur de bûches.

Le bras de verrouillage est monté pivotant sur l'ensemble de sciage pour être mobile entre une position abaissée et une position soulevée, soumis à un organe de rappel pour solliciter ledit bras de verrouillage en direction de sa position abaissée, et pourvu d'une zone d'accroche agencée pour agripper ladite bûche.

De façon préférentielle, ladite machine comporte un dispositif de guidage sectoriel disposé à la sortie de l'ensemble éjecteur dudit barillet qui se compose principalement d'une butée d'appui et d'un toboggan agencé pour réceptionner les tronçons coupés au moment de leur éjection.

La machine comporte avantageusement un dispositif de réglage de la longueur de coupe couplé audit dispositif de guidage sectoriel et agencé pour le déplacer en translation axiale le long de l'axe central et modifier la distance entre ladite butée d'appui et ladite scie.

Selon le mode de réalisation préférée, les moyens d'évacuation de ladite machine sont disposés en aval du barillet et comprennent une zone réceptrice ménagée à la sortie de l'ensemble éjecteur équipé au choix d'une simple rampe, d'une bande transporteuse ou d'un élévateur.

Ladite bande transporteuse de ladite zone réceptrice peut être avantageusement équipée de moyens d'inclinaison pour se transformer en élévateur.

### Description sommaire des dessins :

La présente invention et ses avantages apparaîtront mieux dans la description suivante d'un mode de réalisation donné à titre d'exemple non limitatif, en référence aux dessins annexés, dans lesquels :
- la figure 1A est une vue latérale avant en perspective d'une forme de réalisation préférée de la machine selon l'invention,
- la figure 1B est une vue latérale arrière en perspective de la forme de réalisation préférée de la machine représentée par la figure 1,
- la figure 2A est une vue d'ensemble éclatée en perspective du dispositif de chargement et en particulier du barillet mobile de la machine selon l'invention,
- la figure 2B est une vue d'ensemble assemblée en perspective du dispositif de chargement et en particulier du barillet mobile de la machine selon l'invention,
- la figure 3 est une vue latérale arrière en perspective des moyens d'évacuation associés à la machine selon l'invention,
- les figures 4A, 4B, 4C et 4D sont des vues de face de la machine selon l'invention qui illustrent les phases essentielles de son mode opératoire,
- les figures 5A et 5B sont des vues de côté des moyens de réglage de la longueur de coupe dans deux positions extrêmes,
- la figure 6 est une vue de face de la lame de scie montrant le guidage d'une bûche,
- La figure 7 est une vue de face de l'ensemble éjecteur et de l'ensemble de sciage (la scie n'est pas illustrée) comportant un bras de verrouillage en position abaissée, et
- La figure 8 est une vue de face de l'ensemble éjecteur et de l'ensemble de sciage (la scie n'est pas illustrée) comportant un bras de verrouillage en position soulevée.

### Illustrations de l'invention et meilleure manière de la réaliser:

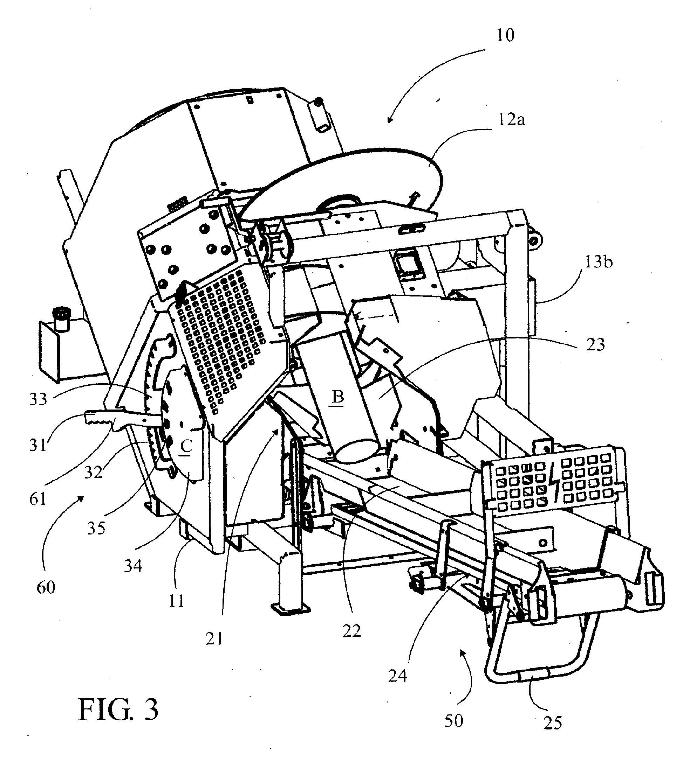

En référence aux figures, et notamment aux figures d'ensemble 1A et 1B, la machine 10 à scier des bûches de bois comporte un bâti 11 sur lequel sont montés tous les composants opérationnels qui permettent de scier de façon semi-automatique des bûches de bois en tronçons de longueur prédéterminée. Les composants essentiels qui interviennent dans le processus comprennent un ensemble de sciage 30, un ensemble de chargement 40 d'au moins une bûche de bois B (voir les figures 3, 4 et 6), disposé en amont de l'ensemble de sciage 30, ce dispositif de chargement 40 étant mobile pour amener ladite bûche B dans une position de sciage par ledit ensemble de sciage 30, et des moyens d'évacuation 50 pour évacuer des tronçons de ladite bûche B après sa coupe.

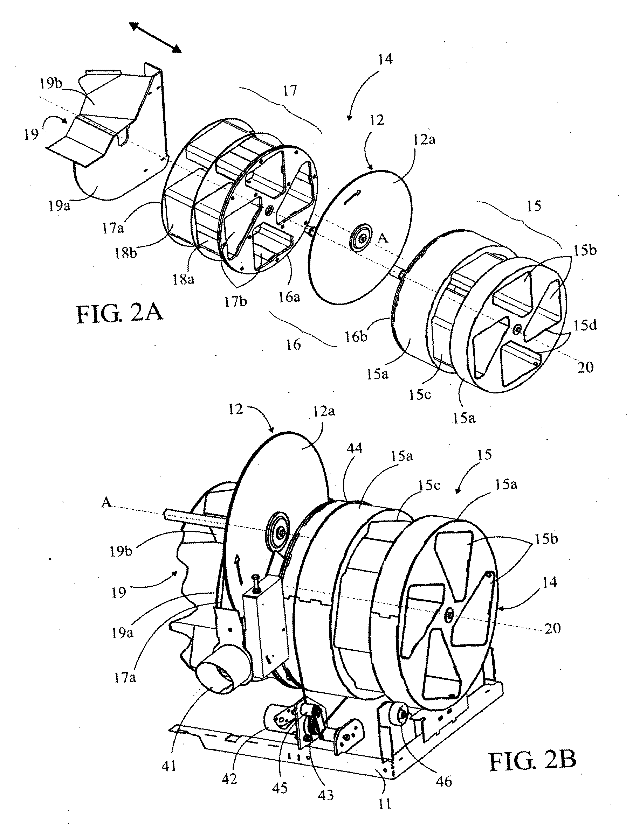

L'ensemble de sciage 30 comprend essentiellement une scie circulaire 12 équipée d'un mécanisme d'entraînement 13 motorisé commandé par un pupitre 13a. La scie circulaire 12 comporte une lame de scie 12a (voir les figures 2, 3, 5 et 6) entraînée en rotation par la motorisation, qui est conçue de manière que cet entraînement puise être effectué soit par un moteur électrique (non représenté), soit par une prise de force 13b, notamment celle d'un tracteur ou similaire. La lame de scie 12a est protégée par un capot 12b qui couvre le secteur apparent et assure la protection de l'utilisateur de la machine 10. L'ensemble de sciage 30 est complété par des moyens d'aspiration des sciures au travers un raccord d'aspiration 41. Les autres composants qui permettent d'assurer la sécurité de l'utilisateur et de garantir le fonctionnement continu de la machine seront décrits plus en détail par la suite.

L'ensemble de chargement 40 comporte un barillet mobile 14 qui est agencé pour recevoir des bûches de bois B destinées à être coupées en tronçons de longueur prédéterminée. Les figures 2A et 2B représentent des vues d'ensemble en perspective du barillet mobile 14 respectivement en vue éclatée et en vue assemblée. Le barillet 14 a une forme générale cylindrique, est mobile en rotation autour d'un axe central 20, de préférence incliné par rapport à l'horizontale pour que la bûche de bois B descende dans le barillet 14 par gravité. Par ailleurs, l'axe de rotation A de la lame de scie 12a est parallèle à cet axe central 20 et de préférence décalé pour permettre la coupe d'une bûche de bois B guidé dans le barillet 14. Ce barillet 14 se compose de trois éléments disposés dans le prolongement les uns des autres. Un premier élément appelé ensemble récepteur de bûches 15, constitue la partie frontale du barillet 14 et se compose d'un corps cylindrique 15a qui porte au moins un, mais de préférence quatre alvéoles 15b qui servent de logements aux bûches B en vue de les guider jusqu'à la lame 12a de la scie circulaire 12. Ces logements sont constitués de secteurs tubulaires 15c, ayant une section sensiblement triangulaire, destinés à recevoir chacun une bûche B. Ces secteurs tubulaires débouchent à l'avant du barillet 14 sur les ouvertures 15d des alvéoles 15b de forme sensiblement triangulaire et qui constituent les embouchures réceptrices des bûches B lors du chargement de la machine 10.

Un deuxième élément appelé ensemble de guidage de coupe 16 est constitué de deux éléments de forme générale circulaire 16a et 16b, disposés de part et d'autre et parallèlement à la lame de scie 12a, et qui forment respectivement la sortie de l'ensemble récepteur de bûches 15 et l'entrée de l'ensemble éjecteur 17, décrit ci-après. Cet ensemble de guidage de coupe 16 contribue à maintenir la bûche B en position au moment où elle entre en contact avec la lame de scie 12a. A cet effet, un bras de verrouillage 12c, décrit plus loin, permet de bloquer la bûche B dans son alvéole avant et pendant l'opération de coupe effectuée par la lame de scie 12a.

Un troisième élément appelé ensemble éjecteur 17 comporte un conteneur cylindrique 17a dans lequel sont ménagés quatre alvéoles 17b, correspondant en forme et en dimensions aux alvéoles 15b de l'ensemble récepteur de bûches 15 et qui servent de logements aux tronçons coupés par la scie circulaire 12. Ces logements sont disposés dans le prolongement des alvéoles 15b de l'ensemble récepteur 15.

Dans l'exemple illustré, l'ensemble éjecteur 17 est en fait réalisé en deux segments, un segment amont 18a et un segment aval 18b montés télescopiquement l'un par rapport à l'autre. Bien entendu, il est possible de prévoir une pluralité de segments télescopiques afin d'ajuster la plage de longueur. Par exemple, il est possible de prévoir un troisième segment monté télescopiquement sur l'un des segments amont ou aval (18a, 18b). Cette construction télescopique permet de modifier la longueur des logements en fonction de la longueur de coupe pour assurer un bon guidage des tronçons de bûches pendant et après la coupe. Avantageusement, ce guidage longitudinal des tronçons de bûches est obtenu sans modification du barillet, ni pièce additionnelle, et permet d'obtenir une sécurité optimale sur toute la longueur de la bûche B et ce quelque soit sa longueur de coupe.

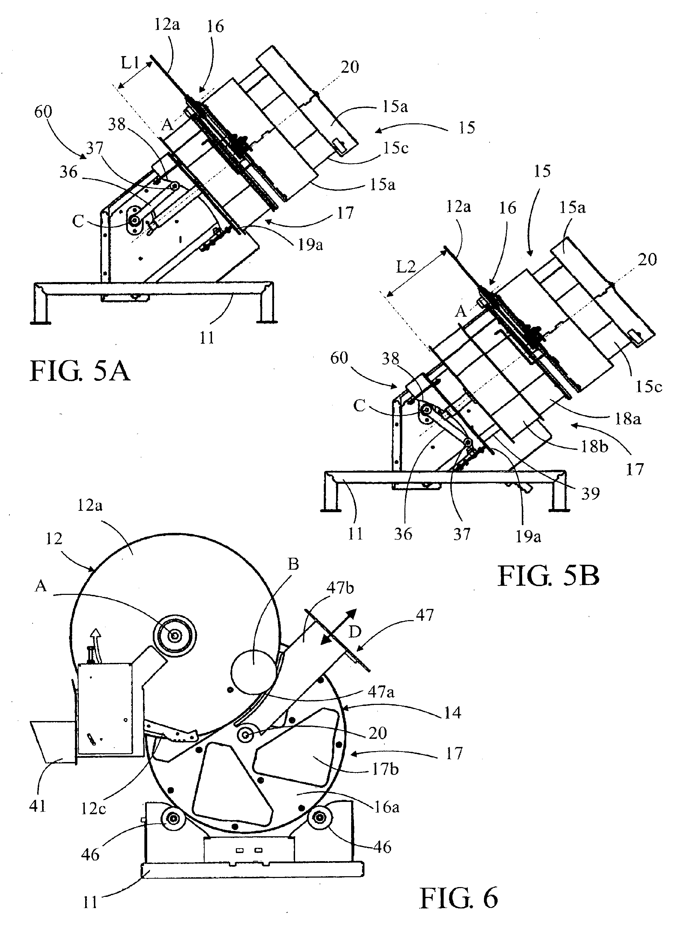

Les différents composants qui constituent le barillet mobile 14 sont rotatifs autour de l'axe central 20 de ce barillet par des moyens d'entraînement illustrés plus particulièrement à la figure 2B. Ils comportent notamment un moteur 42 par exemple hydraulique, couplé à une poulie 43 entraînant en rotation une courroie 44 qui est disposée autour du corps cylindrique 15a du barillet 14 et qui est tendue par un tendeur de courroie 45. Le barillet 14 est par ailleurs guidé en rotation par deux galets fous 46 le soutenant en partie inférieure (voir également la figure 6). Bien entendu, tout autre moyen d'entraînement équivalent peut être prévu.

Un dispositif de guidage sectoriel 19 fixe en rotation est disposé à la sortie de l'ensemble éjecteur 17, c'est-à-dire à l'extrémité du segment aval 18b. Il se compose principalement d'une butée d'appui 19a parallèle à la face de sortie du segment aval 18b et d'un toboggan 19b qui réceptionne les tronçons coupés au moment de leur éjection. La position axiale de la butée d'appui 19a est réglable le long de l'axe central 20 comme expliqué plus loin en référence aux figurés 3, 5A et 5B. Cette position détermine la distance entre la butée d'appui 19a et la lame de scie 12a définissant ainsi la longueur de coupe.

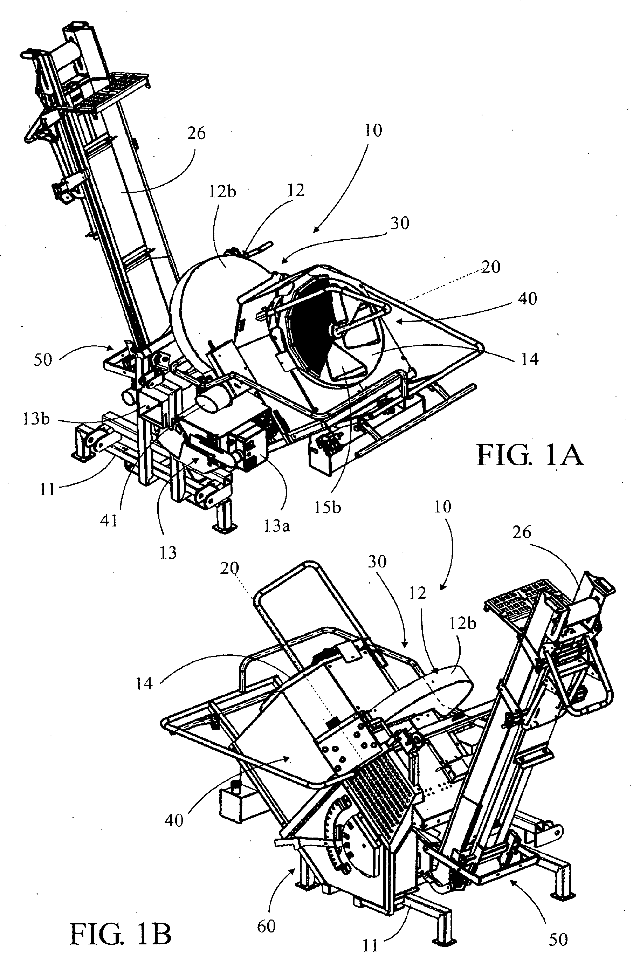

Comme le montrent les figures 1A, 1B et 3, les moyens d'évacuation 50 disposés en aval du barillet 14 sont destinés à évacuer les tronçons de ladite bûche B après sa coupe. Ils comportent une zone réceptrice 21 ménagée à la sortie de l'ensemble éjecteur 17, qui peut être équipée d'une simple rampe, d'une bande transporteuse 22 ou d'un élévateur 26, la bande transporteuse 22 (figure 3) pouvant être inclinée pour se transformer en élévateur 26 (figures 1A-B) en fonction des besoins. La figure 3 illustre la machine 10, vue en perspective latérale arrière et montre en particulier les moyens d'évacuation 50 correspondant à une forme de réalisation particulière de bande transporteuse 22. Une rampe 23 disposée en-dessous de la sortie de l'ensemble éjecteur 17 guide un tronçon de bûche B vers la bande transporteuse 22 montée sur un bâti 24 en appui sur un piétement 25. La bande transporteuse 22 pourrait être soulevée sur son bâti 24 et transformée en élévateur 26 comme dans les figures 1A-B en vue d'amener les tronçons de bûches B sur une remorque ou similaire. On notera cependant que cette réalisation est facultative et que la machine 10 pourrait être utilisée sans équipement particulier d'évacuation, ce dernier pouvant être limité à une simple rampe ou un toboggan ou similaire permettant de guider les tronçons vers une installation indépendante de prise en charge.

La figure 3 représente également un dispositif de réglage manuel 60 de la longueur des tronçons de bûches B à couper à chaque cycle. Ce dispositif comprend principalement un levier pivotant 30 autour d'un axe C, pourvu à son extrémité libre d'une poignée 31 et qui peut être mise dans un certain nombre de positions angulaires prédéfinies par des encoches 32 ou similaires ménagées sur un arceau fixe 33 monté sur le bâti 11 de la machine. Un secteur angulaire 34 également fixe sur le bâti porte des repères 35 correspondant aux différentes longueurs prévues des tronçons de bûches à couper. En référence plus particulièrement aux figures 5A et 5B, le pivotement du levier 30 commande un bras 36 pourvu à son extrémité libre d'un galet 37 qui circule sur un profil de came 38 solidaire du dispositif de guidage sectoriel 19 pour le déplacer en translation le long de l'axe central 20 guidé sur des colonnes de guidage 39. La longueur de coupe peut varier entre une longueur minimale L1 représentée à la figure 5A et par exemple égale à 25cm et une longueur maximale L2 représentée à la figure 5B par exemple égale à 50cm.

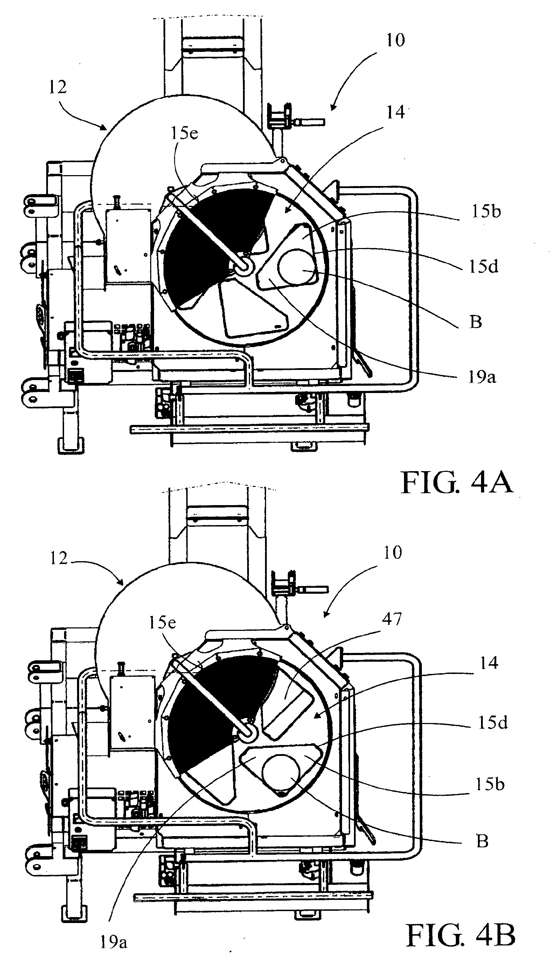

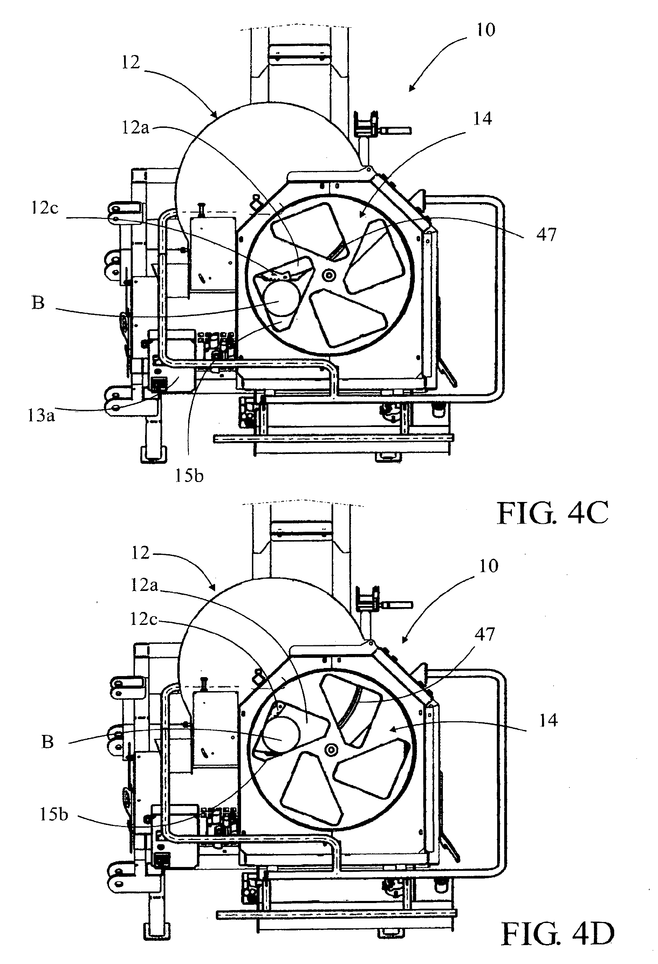

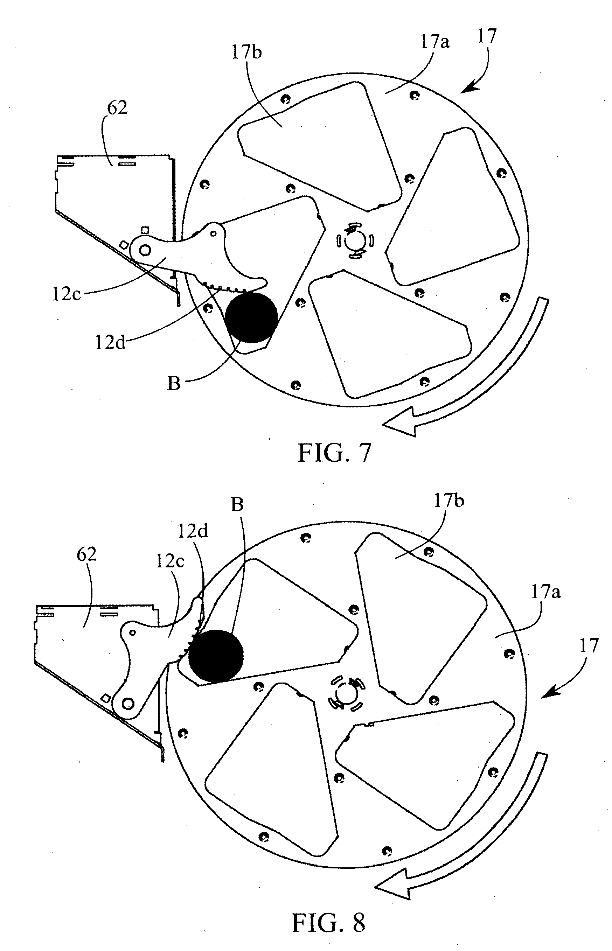

La mise en fonctionnement est illustrée par les vues des figures 4A à 4D qui représentent les séquences opérationnelles de la machine 10 de l'invention. La figure 4A représente la face avant de la machine 10 lorsqu'une première bûche B a été introduite frontalement dans un alvéole 15b du barillet 14 par l'ouverture 15d. Cette opération s'effectue manuellement par un opérateur placé devant la machine 10. La bûche B glisse dans l'alvéole 15b qui est disposé en pente et vient en butée contre l'extrémité arrière du barillet 14 et en particulier contre la butée d'appui 19a. Comme cette butée d'appui 19a est réglable en position longitudinale, la longueur des tronçons peut être ajustée à volonté, de préférence à 25cm, 33cm, 50cm ou 60cm. La figure 4B illustre l'étape suivante au cours de laquelle la bûche B est entraînée dans son alvéole 15b, le barillet 14 étant actionné en rotation par son mécanisme d'entraînement. On notera que la bûche B qui a souvent une section circulaire ou triangulaire est en appui sur deux des cotés de la paroi de section triangulaire de l'alvéole 15b. L'étape suivante est illustrée par la figure 4C qui montre la bûche B déplacée latéralement dans l'alvéole 15b et qui finit par se coincer entre deux parois adjacentes de l'alvéole 15b pour se mettre automatiquement dans une position bloquée en vue du contact avec la lame de scie 12a. On remarquera que la bûche B est bloquée par un bras de verrouillage 12c avant d'entrer en contact avec la périphérie de la lame de scie 12a et jusqu'à ce que le sciage soit terminé, tel que cela est illustré aux figures 7 et 8, de sorte qu'elle ne peut pas rouler sur elle-même, ni d'ailleurs glisser longitudinalement lors de l'opération de coupe, vu qu'elle est en appui à l'arrière contre la butée d'appui 19a. Lorsque la bûche B arrive à proximité de la scie 12a, le bras de verrouillage 12c se soulève et vient bloquer la bûche B dans son alvéole. A cet effet, le bras de verrouillage 12c comporte une zone d'accroche 12d pourvue d'une courbure convexe pour permettre le soulèvement du bras de verrouillage 12c lors de l'arrivée de la bûche, et d'un profil cranté pour agripper la bûche B afin d'améliorer l'adhérence du bras de verrouillage 12c sur la bûche B. Le bras de verrouillage 12c est articulé dans un palier (non représenté) monté sur une cassette 62 de l'ensemble de sciage 30. Le bras de verrouillage 12c comporte au moins un moyen de rappel, tel qu'un ressort ou similaire (non représenté) par exemple enroulé autour de son axe d'articulation, qui permet à la fois d'exercer une pression sur la bûche B lors de la coupe et de rappeler le bras de verrouillage 12c vers sa position abaissée initiale après le passage de la bûche B. La figure 4D montre la phase de coupe au cours de laquelle la bûche B est sectionnée eh deux tronçons. Le bras de verrouillage 12c garde la pression sur la bûche B pendant toute l'opération de coupe. Cette construction permet avantageusement d'utiliser un unique bras de verrouillage 12c pour bloquer les bûches B situées dans chaque alvéole 15b à tour de rôle lors de leur coupe respective. Cette configuration est économique car elle permet de se limiter à l'utilisation d'un seul bras de verrouillage 12c pour l'ensemble des bûches B et ce uniquement lorsque cela est nécessaire, c'est-à-dire, lors de l'opération de coupe. Si, par exemple la bûche B a une longueur initiale de 100cm et si la butée d'appui 19a est réglée pour que les tronçons soient coupés à 50cm, les deux tronçons auront la longueur voulue et une deuxième phase de coupe ne sera plus nécessaire. Si, par exemple, la longueur des tronçons est choisie à 33cm, le premier tronçon coupé aura la longueur demandée, le reste de la bûche B devra suivre un cycle de rotation du barillet 14 et sera coupé en deux tronçons de 33cm de longueur. Après la première coupe de la bûche B, la partie arrière coupée est évacuée à travers l'ensemble éjecteur 17 puis par le toboggan 19b alors que la partie avant passe sur un guide latéral 47 qui la soulève légèrement pour la positionner en prévision du cycle de coupe suivant. Ainsi, l'ensemble récepteur de bûches 15 positionne et maintient le tronçon de bûche dès la première coupe et lors des cycles de coupe suivants. Le guide latéral 47 comporte une partie courbe 47a qui permet de soulever la bûche B pour la libérer des dents de la lame de scie 12a, suivie d'une partie droite 47b qui permet de faire redescendre la bûche B pour qu'elle glisse dans un alvéole 17b jusqu'à la butée d'appui 19a. Ce guide latéral 46 est réglable en position selon la flèche D (voir figure 6). Il permet ainsi un fonctionnement particulièrement silencieux de la machine 10 évitant tout bruit inutile en dehors de l'opération de coupe proprement dite.

Dans la réalisation représentée, le nombre des alvéoles 15b et 17b est de quatre, de sorte que l'opérateur dispose de quatre accès pour les bûches B. Il peut charger les alvéoles 15b dans la zone libre d'accès qui est visible sur la figure 4A, un cache 15e couvrant une surface inférieure ou égale à 180° pour masquer l'accès à deux des quatre alvéoles 15b. Dès qu'un alvéole 15b libre se présente dans la zone accessible, l'opérateur peut charger une nouvelle bûche B dans le barillet mobile 14.

La partie active de la lame de scie 12a n'apparaît pas parce qu'elle est entièrement masquée par le barillet 14, et sa partie non active est masquée par le capot 12b pour éviter tout risque de contact avec l'opérateur.

La présente invention n'est pas limitée à cette forme de réalisation, mais pourrait être étendue à diverses variantes dérivées de celle-ci et évidentes pour un homme du métier. Dans la version décrite, le chargement s'effectue manuellement et la coupe est automatique ainsi que l'évacuation des tronçons coupés. Il est évident que le chargement pourrait être automatisé ainsi que le réglage de la longueur des tronçons coupés de sorte que toute l'opération de la machine 10 pourrait devenir automatique avec une unité de commande programmable. La fonctionnalité de la coupe ne serait en rien modifiée. La machine semi-automatique décrite répond aux exigences de sécurité de l'utilisateur, ce qui correspond au but sécuritaire de l'invention.

## Revendications

1. Machine (10) à scier des bûches de bois comportant un bâti (11) qui porte une scie (12) équipée d'un mécanisme d'entraînement (13) motorisé, des moyens pour recevoir au moins une bûche de bois (B), disposés en amont de ladite scie, ces moyens étant mobiles au moins entre une position de repos et une position de sciage, et des moyens d'évacuation (50) des tronçons de bûche coupés, ladite machine comportant en outre un ensemble de chargement (40) agencé pour charger au moins une bûche (B) à couper et pour la diriger automatiquement vers un ensemble de sciage (30) agencé pour couper ladite bûche en au moins deux tronçons de longueurs prédéterminées, et un ensemble éjecteur (17) agencé pour éjecter les tronçons de façon automatique après le sciage de ladite bûche, ledit ensemble de chargement (40) comportant un support rotatif (14) de forme générale cylindrique et des moyens mécaniques (42-45) pour entraîner ledit support rotatif (14) autour d'un axe central (20), ladite scie (12) étant du type scie circulaire dont l'axe de rotation (A) est parallèle à l'axe central (20) dudit support rotatif (14), et ledit ensemble éjecteur (17) étant combiné audit ensemble de chargement (40) pour réaliser des moyens de guidage des tronçons de bûche coupés et à des moyens de réglage (19, 60) de la longueur desdits tronçons sciés dans ladite bûche, ledit support rotatif de l'ensemble de chargement (40) comportant un barillet mobile (14) autour dudit axe central (20) qui se compose d'au moins trois éléments disposés dans le prolongement les uns des autres : un premier élément appelé ensemble récepteur de bûches (15), un deuxième élément appelé ensemble de guidage de coupe (16) et un troisième élément appelé ensemble éjecteur (17) **caractérisée en ce que** ledit ensemble éjecteur est de construction télescopique

2. Machine selon la revendication 1, **caractérisée en ce que** l'axe central (20) dudit support rotatif (14) est incliné par rapport à l'horizontale de sorte que l'ensemble de chargement (40) guide la bûche de bois (B) par gravité vers ledit ensemble de sciage (30).

3. Machine selon la revendication 1, **caractérisée en ce que** ledit ensemble récepteur de bûches (15) constitue la partie frontale du barillet (14) et se compose d'un corps cylindrique (15a) qui comporte au moins un, et de préférence quatre alvéoles (15b) qui servent de logements aux bûches en vue de les guider jusqu'à l'ensemble de sciage (30).

4. Machine selon la revendication 3, **caractérisée en ce que** les alvéoles (15b) sont définis par des secteurs tubulaires (15c) ayant une section sensiblement triangulaire et débouchant à l'avant du barillet (14) sur des ouvertures (15d) pour constituer des embouchures réceptrices des bûches lors du chargement de la machine (10).

5. Machine selon la revendication 3, **caractérisée en ce que** ledit ensemble récepteur de bûches (15) comporte un guide latéral (47) agencé pour soulever le tronçon de bûche restant après un premier cycle de coupe et pour le positionner en prévision du cycle de coupe suivant.

6. Machine selon la revendication 1, **caractérisée en ce que** ledit ensemble de guidage de coupe (16) est constitué de deux éléments de forme générale circulaire (16a et 16b) parallèles et disposés à la sortie de l'ensemble récepteur de bûches (15).

7. Machine selon la revendication 3, **caractérisée en ce que** ledit ensemble éjecteur (17) comporte un conteneur cylindrique (17a) dans lequel est ménagé au moins un, et de préférence quatre alvéoles (17b) qui servent de logements aux tronçons de la bûche coupés.

8. Machine selon la revendication 7, **caractérisée en ce que** chaque alvéole (17b) correspond en forme et en dimensions à un alvéole (15b) correspondant de l'ensemble récepteur de bûches (15) et est situé dans le prolongement de cet alvéole (15b).

9. Machine selon la revendication 7, **caractérisée en ce que** lesdits alvéoles (17b) sont réalisés en au moins deux segments, un segment amont (18a) et un segment aval (18b) montés télescopiquement l'un par rapport à l'autre.

10. Machine selon la revendication 3, **caractérisée en ce que** ledit ensemble de sciage (30) comporte une lame de scie circulaire (12a) dont l'axe de rotation (A) est parallèle à l'axe central (20) du barillet (14) et un bras de verrouillage (12c) agencé pour bloquer ladite bûche (B) à scier dans l'alvéole (15b) du corps cylindrique (15a) dudit ensemble récepteur de bûches (15).

11. Machine selon la revendication 10, **caractérisée en ce que** ledit bras de verrouillage (12c) est monté pivotant sur l'ensemble de sciage (30) pour être mobile entre une position abaissée et une position soulevée, soumis à un organe de rappel pour solliciter ledit bras de verrouillage (12c) en direction de sa position abaissée, et pourvu d'une zone d'accroche (12d) agencée pour agripper ladite bûche (B).

12. Machine selon la revendication 1, **caractérisée en ce qu'**elle comporte un dispositif de guidage sectoriel (19) disposé à la sortie de l'ensemble éjecteur (17) du barillet (14) qui se compose principalement d'une butée d'appui (19a) et d'un toboggan (19b) agencé pour réceptionner les tronçons coupés au moment de leur éjection.

13. Machine selon la revendication 12, **caractérisée en ce qu'**elle comporte un dispositif de réglage (60) de la longueur de coupe couplé audit dispositif de guidage sectoriel (19) et agencé pour le déplacer en translation axiale le long de l'axe central (20) et modifier la distance entre ladite butée d'appui (19a) et ladite scie (12).

14. Machine selon la revendication 1, **caractérisée en ce que** les moyens d'évacuation (50) de ladite machine (10) sont disposés en aval du barillet (14) et comprennent une zone réceptrice (21) ménagée à la sortie de l'ensemble éjecteur (17) équipé au choix d'une simple rampe, d'une bande transporteuse (22) ou d'un élévateur (26).

15. Machine selon la revendication 14, **caractérisée en ce que** ladite bande transporteuse (22) de la zone réceptrice (21) est équipée de moyens pour se transformer en élévateur (26).

## Patentansprüche

1. Maschine (10) zum Sägen von Holzscheiten mit einem Gestell (11), welches eine mit einem motorisierten Antriebsmechanismus (13) ausgestattete Säge (12) trägt, und mit vor der besagten Säge angeordneten Mitteln zur Aufnahme von zumindest einem Holzscheit (B), wobei diese Mittel mindestens zwischen einer Ruhestellung und einer Sägestellung beweglich sind, und Mitteln (50) zum Ausschleusen der gesägten Scheitabschnitte, wobei die besagte Maschine zudem eine Beladeeinheit (40) beträgt, die ausgelegt ist, um zumindest ein zu sägendes Scheit (B) zu laden und es automatisch zu einer Sägeeinheit (30) zu führen, die ausgelegt ist, um das besagte Scheit in mindestens zwei Abschnitte mit vorbestimmten Längen zu sägen, und eine Auswerfeinheit (17), die ausgelegt ist, um die Abschnitte nach dem Sägen des besagten Scheites automatisch auszuweifen, wobei die besagte Beladeeinheit (40) eine drehende Aufnahme (14) mit einer allgemeinen zylindrischen Form, sowie mechanische Mittel (42-45) zum Antrieb der besagten drehenden Aufnahme (14) um eine zentralen Achse (20) beträgt, wobei die besagte Säge (12) des Typs Kreissäge ist, mit einer Drehachse (A) parallel zur zentralen Achse (20) der besagten drehenden Aufnahme (14), und wobei die besagte Auswerfeinheit (17) mit der besagten Beladeeinheit (40) kombiniert ist, um Führungsmittel für die gesägten Scheitabschnitte zu bilden, sowie mit Einstellmitteln (19, 60) für die Länge der besagten in dem besagten Scheit gesägten Abschnitte, wobei die besagte drehende Aufnahme der Beladeeinheit (40) eine um die besagte zentrale Achse (20) bewegliche Trommel (14) beträgt, die aus zumindest drei nacheinander angeordneten Elementen besteht: Ein erstes, als Scheiteraufnahme-Einheit (15) bezeichnetes Element, ein zweites, als Schnittführungs-Einheit (16) bezeichnetes Element, und ein drittes, als Auswerfer-Einheit (17) bezeichnetes Element, **dadurch gekennzeichnet**, dass die besagte Auswerfeinheit (17) in teleskopischer Bauweise ist.

2. Maschine nach Anspruch 1, **dadurch gekennzeichnet, dass** die zentrale Achse (20) der besagten drehenden Aufnahme (14) in Bezug auf die Horizontale geneigt ist, so dass die Beladeeinheit (40) das Holzscheit (B) durch Schwerkraft der besagten Sägeeinheit (30) zuführt.

3. Maschine nach Anspruch 1, **dadurch gekennzeichnet, dass** die besagte Scheiteraufnahme-Einheit (15) den Vorderteil der Trommel (14) bildet und aus einem zylindrischen Körper (15a) besteht, der zumindest eine und vorteilhaft vier Zellen (15b) beträgt, die als Aufnahmen für die Scheiten dienen, um sie der Sägeeinheit (30) zuzuführen.

4. Maschine nach Anspruch 3, **dadurch gekennzeichnet, dass** die Zellen (15b) aus Rohrabschnitten (15c) mit einem merklich dreieckigen Querschnitt geformt sind, die auf der Vorderseite der Trommel (14) Öffnungen (15d) bilden, die beim Beladen der Maschine (10) als Aufnahme-Mündungen für die Scheite dienen.

5. Maschine nach Anspruch 3, **dadurch gekennzeichnet, dass** die besagte Scheiteraufnahme-Einheit (15) eine seitliche Führung (47) beträgt, die ausgelegt ist, um den nach einem ersten Schneid-Zyklus übrig bleibenden Scheit-Abschnitt anzuheben und für den nächsten Schneid-Zyklus zu positionieren.

6. Maschine nach Anspruch 1, **dadurch gekennzeichnet, dass** die besagte Schnittführungs-Einheit (16) aus zwei parallelen, allgemein kreisförmigen Elementen (16a und 16b) besteht, die am Ausgang der Scheiteraufnahme-Einheit (15) angeordnet sind.

7. Maschine nach Anspruch 3, **dadurch gekennzeichnet, dass** die besagte Auswerfeinheit (17) einen zylindrischen Behälter (17a) beträgt, in dem zumindest eine und vorteilhaft vier Zellen (17b) vorgesehen sind, die als Aufnahmen für die Abschnitte des gesägten Scheites dienen

8. Maschine nach Anspruch 7, **dadurch gekennzeichnet, dass** die Form und die Abmessungen jeder Zelle (17b) denen einer entsprechenden Zelle (15b) der Scheiteraufnahme-Einheit (15) entsprechen, und dass diese Zelle (17b) in der Verlängerung dieser Zelle (15b) angeordnet ist.

9. Maschine nach Anspruch 7, **dadurch gekennzeichnet, dass** die besagten Zellen (17b) in zumindest zwei Segmenten hergestellt sind, ein vorgelagertes Segment (18a) und ein nachgelagertes Segment (18b), die teleskopisch zueinander montiert sind.

10. Maschine nach Anspruch 3, **dadurch gekennzeichnet, dass** die besagte Sägeeinheit (30) ein Kreissägeblatt (12a) beträgt, dessen Drehachse (A) parallel zur zentralen Achse (20) der Trommel (14) ist, sowie ein Verriegelungsarm (12c), der ausgelegt ist, um das besagte zu sägende Scheit (B) in der Zelle (15b) des zylindrischen Körpers (15a) der besagten Scheiteraufnahme-Einheit (15) einzuklemmen.

11. Maschine nach Anspruch 10, **dadurch gekennzeichnet, dass** der besagte Verriegelungsarm (12c) schwenkbar auf der Sägeeinheit (30) montiert ist, um zwischen einer unteren Stellung und einer oberen Stellung beweglich zu sein, mit einem Rückzugselement, um den besagten Verriegelungsarm (12c) in Richtung seiner unteren Stellung zu beaufschlagen, und mit einem Halte-Bereich (12d), der ausgelegt ist, um das besagte Scheit (B) zu greifen.

12. Maschine nach Anspruch 1, **dadurch gekennzeichnet, dass** sie eine am Ausgang der Auswerfeinheit (17) der Trommel (14) angeordnete sektorförmige Führungsvorrichtung (19) beträgt, die hauptsächlich aus einem Abstützanschlag (19a) und einer Rutsche (19b) besteht, die angeordnet ist, um die gesägten Abschnitte beim Auswerfen aufzunehmen.

13. Maschine nach Anspruch 12, **dadurch gekennzeichnet, dass** sie eine EinstellVorrichtung (60) für die Schneidlänge beträgt, die mit der sektorförmigen Führungsvorrichtung (19) gekoppelt ist, und ausgelegt ist, um diese in axialer Richtung entlang der zentralen Achse (20) zu bewegen und den Abstand zwischen dem besagten Abstützanschlag (19a) und der besagten Säge (12) zu ändern.

14. Maschine nach Anspruch 1, **dadurch gekennzeichnet, dass** die Ausschleus-Mittel (50) der besagten Maschine (10) nach der Trommel (14) angeordnet sind und einen am Ausgang der Ausweifeinheit (17) angeordneten Aufnahme-Bereich (21) betragen, der wahlweise mit einer einfachen Rampe, einem Förderband (22) oder einem Aufzug (26) ausgerüstet werden kann.

15. Maschine nach Anspruch 14, **dadurch gekennzeichnet, dass** das besagte Förderband (22) des Aufnahme-Bereichs (21) mit Mitteln ausgestattet ist, um es in einen Aufzug (26) umzuwandeln.

## Claims

1. Machine (10) for sawing wood logs comprising a frame (11) that carries a saw (12) equipped with a motorized driving mechanism (13), means for receiving at least one wood log (B), located upstream of said saw, these means being movable between at least a resting position and a sawing position, and evacuating means (50) for the cut log sections, said machine comprising moreover a loading unit (40) arranged to load at least one log (B) to be cut and to direct it automatically towards a sawing unit (30) arranged to cut said log in at least two sections with predetermined lengths, and an ejector unit (17) arranged to eject the sections automatically after sawing said log, said loading unit (40) including a rotary support (14) with an overall cylindrical shape and mechanical means (42-45) to drive said rotary support (14) around a central axis (20), said saw (12) being of the circular saw type with a rotational axis (A) parallel to the central axis (20) of said rotary support (14), and said ejector unit (17) being combined with said loading unit (40) to form guiding means for the cut log sections and with adjusting means (19, 60) for the length of said sections cut in said log, said rotary support of the loading unit (40) comprising a drum (14) movable around said central axis (20) and made of at east three elements arranged in the extension of one another: a first element called log receiving unit (15), a second element called cut guide unit (16) and a third element called ejector unit (17), **characterized** in that said ejector unit (17) has a telescopic design.

2. Machine according to claim 1, **characterized in that** the central axis (20) of said rotary support (14) is inclined with respect to the horizontal so that the loading unit (40) guides the wood log (B) by gravity towards said sawing unit (30).

3. Machine according to claim 1, **characterized in that** said log receiving unit (15) forms the front section of drum (14) and is made of a cylindrical body (15a) that includes at least one and preferably four cells (15b) provided to receive the logs in order to guide them to the sawing unit (30).

4. Machine according to claim 3, **characterized in that** the cells (15b) are defined by tubular sectors (15c) with a substantially triangular cross-section and leading to openings (15d) at the front of drum (14) to form log receiving orifices at the time of loading the machine (10).

5. Machine according to claim 3, **characterized in that** said log receiving unit (15) includes a lateral guide (47) arranged to lift up the remaining wood section after a first cutting cycle and to position it for the following cutting cycle.

6. Machine according to claim 1, **characterized in that** said cut guide unit (16) is made of two elements with an overall circular shape (16a and 16b), parallel and arranged at the outlet of the log receiving unit (15).

7. Machine according to claim 3, **characterized in that** said ejector unit (17) comprises a cylindrical container (17a) wherein at least one and preferably four cells (17b) are provided to receive the cut log sections.

8. Machine according to claim 7, **characterized in that** each cell (17b) corresponds in shape and dimensions to a matching cell (15b) of the log receiving unit (15) and is located in the extension of this cell (15b).

9. Machine according to claim 7, **characterized in that** said cells (17b) are made of at least two segments, an upstream segment (18a) and a downstream segment (18b) mounted telescopically with respect to one another.

10. Machine according to claim 3, **characterized in that** said sawing unit (30) comprises a circular saw blade (12a) whose rotary axis (A) is parallel to the central axis (20) of drum (14) and a locking arm (12c) arranged to block said log (B) to be cut in cell (15b) of the cylindrical body (15a) of said log receiving unit (15).

11. Machine according to claim 10, **characterized in that** said locking arm (12c) is mounted pivotably on the sawing unit (30) to be movable between a lowered position and a raised position, subjected to a returning member to push said locking arm (12c) towards its lowered position, and provided with a gripping area (12d) arranged to grip said log (B).

12. Machine according to claim 1, **characterized in that** it comprises a sectoral guiding device (19) located at the outlet of the ejector unit (17) of drum (14), made mainly of a supporting stop (19a) and of a slide (19b) arranged to receive the cut sections at the time of their ejection.

13. Machine according to claim 12, **characterized in that** it comprises a cutting length adjusting device (60) coupled with said sectoral guiding device (19) and arranged to move it in axial translation along the central axis (20) and modify the distance between said supporting stop (19a) and said saw (12).

14. Machine according to claim 1, **characterized in that** the evacuating means (50) of said machine (10) are located downstream of drum (14) and comprise a receiving area (21) provided at the outlet of the ejector unit (17), equipped optionally with a simple ramp, a conveyor belt (22) or an elevator (26).

15. Machine according to claim 14, **characterized in that** said conveyor belt (22) of receiving area (21) is equipped with means to be converted into an elevator (26).
